# EUROPÄISCHE PATENTSCHRIFT

(11) **EP 4 348 789 B1**
(45) Veröffentlichungstag und Bekanntmachung des Hinweises auf die Patenterteilung: **27.08.2025**
(21) Anmeldenummer: 22730113.2
(22) Anmeldetag: 17.05.2022
(51) Int. Cl.: H02J 1/12

(54) **ENERGIEVERSORGUNGSSYSTEM UND VERFAHREN ZUR ENERGIEVERSORGUNG**
ENERGY SUPPLY SYSTEM AND METHOD FOR SUPPLYING ENERGY
SYSTÈME DE FOURNITURE D'ÉNERGIE ET PROCÉDÉ DE FOURNITURE D'ÉNERGIE

(30) Priorität: 08.09.2021 DE 102021209915
(43) Veröffentlichungstag der Anmeldung: 10.04.2024
(73) Patentinhaber: Siemens Energy Global GmbH & Co. KG, 81739 München (DE)
(72) Erfinder: SCHOLZ, Thomas, 23858 Barnitz (DE)
(86) Internationale Anmeldenummer: PCT/EP2022/063284
(87) Internationale Veröffentlichungsnummer: WO 2023/036478

(56) Entgegenhaltungen:
- US-A1- 2001 018 138
- US-A1- 2005 048 335
- US-A1- 2007 190 369
- US-A1- 2016 297 544
- US-A1- 2017 047 738
- US-B1- 6 255 008

## Beschreibung

Die Erfindung betrifft ein Energieversorgungssystem sowie ein Verfahren zur Energieversorgung.

Bisher werden in elektrischen Systemen Batterien gemeinsam mit Brennstoffzellen im Hinblick auf die Kapazitäten nur in sehr unterschiedlichen Größen als Netzversorgung eingesetzt. Da in solchen Fällen nur eine Komponente hauptsächlich das elektrische Netz versorgt, ist ein Energiemanagement nicht vorgesehen.

Bei Systemen, bei denen das elektrische Netz hauptsächlich von einer Batterie versorgt wird, ist die erheblich kleinere Brennstoffzelle nur zur Unterstützung installiert. Eine negative Beeinflussung der Batterie, z.B. durch Überladen der Batterie durch die Brennstoffzelle, ist technisch fast nicht möglich. Aufgrund der geringen Größe der Brennstoffzelle würde dafür sehr viel Zeit und Gas benötigt. Ein Energiemanagement ist in diesen Systemen nicht installiert. Beispielsweise gibt es auf U-Booten eine große Batterie, die das elektrische Netz versorgt und eine Brennstoffzelle die über einen DC/DC-Wandler an das Energieversorgungssystem angekoppelt ist. Die Kapazität der Brennstoffzelle liegt, verglichen mit der Kapazität der Batterie, im Promillebereich. Die Brennstoffzelle wird entweder zur Batteriepflege oder in Ausnahmefällen zur Mitversorgung eines Teils des Bordnetzes genutzt. Die Hauptladung der Batterie erfolgt üblicherweise über Generatoren, da die Brennstoffzelle die dafür benötigten Ströme nicht liefern kann. Die Steuerung des Brennstoffzellensystems erfolgt typischer Weise über ein Automationssystem.

Umgekehrt ist bei Systemen, bei denen nahezu ausschließlich die Brennstoffzelle das elektrische Netz versorgt, nur eine kleine Batterie installiert, die ausschließlich zum Starten des Systems vorgesehen ist. Nach dem Startvorgang erfolgt das Nachladen der Batterie, parallel zur Versorgung des Systems, durch die Brennstoffzelle. Durch einen einfachen Laderegler wird der Ladevorgang überwacht und beendet, sobald die Batterie voll ist. Da das System im Wesentlichen nur von der Brennstoffzelle versorgt wird, ist ein Energiemanagement auch hier nicht vorgesehen. Derartige Konstellationen finden sich beispielsweise im sogenannten Mobility-Bereich, in dem größere Brennstoffzellen verbaut werden, die das Fahrzeug und den Antrieb versorgen. Die Batterie liefert nur die Energie für den Start des Systems und der Brennstoffzelle. Während die Brennstoffzelle das Fahrzeug und den Antrieb versorgt, wird die Batterie wieder aufgeladen, genauso, wie es bei einem konventionellen Fahrzeug während des Betriebs durch die Lichtmaschine erfolgt. Bei dieser Anwendung gibt es nur eine Brennstoffzelle und eine Batterie. Mehrere gleichartige Versorgungssysteme sind hier nicht vorgesehen.

Die US 2001/018138 A1 offenbart beispielsweise ein System, das eine Brennstoffzelle in einem Arbeitspunkt mit hoher Energieumwandlungseffizienz betreibt. Eine Steuereinheit berechnet die erforderliche Leistung eines Wechselrichters.

In Versorgungssystemen mit mehreren Energieerzeugern oder Lieferanten vergleichbarer Kapazität oder mit mehreren gleichartigen Komponenten, sorgt üblicherweise ein Energiemanagement-System dafür, dass sich die Last aus dem elektrischen Netz gleichmäßig auf die im elektrischen Netz verbauten Energielieferanten, wie z.B. Generatoren und / oder Batterien verteilt. Ein solches System mit einer zentralen Steuerung wird beispielsweise in der US 2016/297544 A1 für die Sicherung der Stabilität eines Luftfahrzeugs eingesetzt. Wird die Energie auch durch Generatoren erzeugt, stoppt oder startet dieses Energiemanagement, je nach Last, auch die jeweiligen Generatoren. Jedenfalls käme man ohne ein übergeordnetes Energiemanagement nicht aus. Besonders, wenn Lithium-Akkumulatoren zum Einsatz kommen. Ein Überladen der Batterie, was bei in Bezug auf die Kapazität annähernd gleich großen Komponenten schnell möglich ist, würde die Lebensdauer der Batterie erheblich reduzieren oder diese zerstören. Bei Brennstoffzellen sind ebenfalls bestimmte Grenzen einzuhalten, will man die Lebensdauer der Zelle nicht reduzieren oder die Brennstoffzelle zerstören. So verringert Überlast oder Rückspeisung in die Brennstoffzelle ebenfalls deren Lebensdauer oder zerstört sie. Ein übergeordnetes Energiemanagement muss jedenfalls auf die Art und die Anzahl der jeweiligen im System verbauten Komponenten angepasst werden.

Aufgabe der Erfindung ist es, ein Energieversorgungssystem bereitzustellen, das eine im Hinblick auf Flexibilität, Sicherheit und Lebensdauer der Komponenten verbesserte Energieversorgung ermöglicht. Ferner ist es auch Aufgabe der Erfindung, ein entsprechendes Verfahren zur Energieversorgung anzugeben.

Die Erfindung löst die auf ein Energieversorgungssystem gerichtete Aufgabe, indem sie vorsieht, dass das Energieversorgungssystem voneinander unabhängige, insbesondere im Hinblick auf eine Steuerung autarke, parallelgeschaltete Energieversorgungsmodule umfasst, die Energieversorgungsmodule jeweils umfassend Verbraucheranschlüsse, eine Batterie, die direkt an die Verbraucheranschlüsse koppelt, eine Brennstoffzelle, die über einen DC/DC-Wandler an die Verbraucheranschlüsse koppelt, ferner ein Energiemanagementsystem, mit dem der Arbeitspunkt der Brennstoffzelle, bzw. der Arbeitspunkt des DC/DC-Wandlers in Abhängigkeit von einem Ladezustand der Batterie steuerbar sind.

Insbesondere sind je Energieversorgungsmodul der Arbeitspunkt der Brennstoffzelle, bzw. der Arbeitspunkt des DC/DC-Wandlers ausschließlich in Abhängigkeit von einem Ladezustand der Batterie steuerbar.

Das autarke Energiemanagementsystem eines jeden Energieversorgungsmoduls des Energieversorgungssystems steuert den Arbeitspunkt des jeweiligen DC/DC-Wandlers so, dass, zusammen mit der jeweiligen Batterie, immer genügend Leistung für einen Verbraucher zur Verfügung steht.

Parallel dazu sorgen die Energiemanagementsysteme der Energieversorgungsmodule dafür, dass sich der Ladezustand der jeweiligen Batterie immer nur in festgelegten Grenzen bewegt. Durch dieses Vorgehen wird die maximale Lebensdauer aller Komponenten sichergestellt.

Vorteilhafter Weise umfassen die Energieversorgungsmodule weiter jeweils ein Bus-System für die Kommunikation zwischen dem Energiemanagementsystem und einem Batteriemanagementsystem eines Energieversorgungsmoduls, für die Kommunikation zwischen dem Energiemanagementsystem und einer Steuerung der Brennstoffzelle des Energieversorgungsmoduls und für die Kommunikation zwischen dem Energiemanagementsystem und dem DC/DC-Wandler des Versorgungsmoduls. Über dieses Bus-System werden zwischen dem Energiemanagementsystem und den einzelnen Komponenten alle für den Betrieb des Energieversorgungsmoduls notwendigen Daten, Steuerwerte, Warnungen und Fehlermeldungen übertragen.

Das Energieversorgungsmodul ermöglicht somit den Aufbau eines Energieversorgungssystems aus einem oder mehreren gleichartigen, bezüglich einer Steuerung autarken und voneinander unabhängigen Versorgungskomponenten, ohne dass ein übergeordnetes Steuerungssystem notwendig wäre, bei Sicherstellung der maximalen Lebensdauer der Bauteile in den Komponenten.

Die auf ein Verfahren zur Energieversorgung gerichtete Aufgabe wird gelöst durch ein Verfahren, bei dem eine geforderte Grundlast von einem Energieversorgungssystem, umfassend parallelgeschaltete und jeweils autark gesteuerte Energieversorgungsmodule, bereitgestellt werden kann, wobei je Energieversorgungsmodul Energie sowohl von einer Batterie direkt als auch über einen DC/DC-Wandler von einer Brennstoffzelle, als auch von Batterie und Brennstoffzelle gemeinsam bereitgestellt werden kann, wobei je Energieversorgungsmodul ein Ladezustand der Batterie ermittelt wird und ein Arbeitspunkt der Brennstoffzelle bzw. ein Arbeitspunkt des DC/DC-Wandlers in Abhängigkeit vom Ladezustand der Batterie gesteuert wird.

Wie bereits zum Energieversorgungssystem ausgeführt, wird der Arbeitspunkt des DC/DC-Wandlers so gesteuert, dass, zusammen mit der Batterie, immer genügend Leistung für einen Verbraucher zur Verfügung steht. Dabei bewegt sich gemäß der Erfindung der Ladezustand der Batterie immer in festgelegten Grenzen. Durch dieses Vorgehen wird die maximale Lebensdauer aller Komponenten sichergestellt.

Vorteilhafter Weise werden transient auftretende Lastspitzen nur von der Batterie abgedeckt, weil die Batterie keine Vorlaufzeit aufweist, bis Energie geliefert werden kann, wie dies bei der Brennstoffzelle der Fall wäre.

Weiterhin ist es vorteilhaft, wenn sich ein Ladezustand der Batterie immer nur in festgelegten Grenzen bewegt. Jede sogenannte Tiefentladung schädigt eine Batterie. Typischerweise summieren sich diese Schädigungen. Aber auch am oberen Ende der Ladezustandsskala sollte darauf geachtet werden, dass die Batterie nicht regelmäßig auf 100% geladen wird. Ein Ladezustand von 80 bis 90% als obere Grenze ist hierbei zweckmäßig.

Die beiden Ladeendpunkte für die Batterie, sowohl der untere Ladeendpunkt SoCₘᵢₙ wie auch der obere Ladeendpunkt SoCₘₐₓ werden so gewählt, dass die maximale Lebensdauer der Batterie bei der maximal nutzbaren Kapazität erreicht wird, wie auch genügend Regelreserve für die Brennstoffzelle vorhanden ist.

Ebenfalls zweckmäßig ist es, wenn der Arbeitspunkt des DC/DC-Wandlers so gesteuert wird, dass zusammen mit der Batterie immer genügend Leistung zur Verfügung steht. Über den Arbeitspunkt des DC/DC-Wandlers können die Gesamtleistung des Energieversorgungsmoduls sowie die Belastung seiner Komponenten auf einfache Weise eingestellt werden.

Es ist vorteilhaft, wenn für das Verfahren notwendige Daten, Steuerwerte, Warnungen und Fehlermeldungen über ein Bus-System übertragen werden. Er ermöglicht einen bidirektionalen Betrieb und erlaubt es, mehrere Komponenten über den gleichen Satz von Leitungen untereinander sicher zu verbinden.

Es wurde bereits ausgeführt, dass zu tiefe Entladungen der Batterie vermieden werden sollen. Es ist daher zweckmäßig, dass, wenn festgestellt wird, dass der Ladezustand der Batterie (SoC) unter einen vordefinierten Schwellwert SoCₘᵢₙ sinkt, der Arbeitspunkt des DC/DC-Wandlers so weit erhöht wird, bis die Batterie in den Ladezustand wechselt.

Ebenso ist es zweckmäßig, wenn die Batterie von Laden in Entladen wechselt, bevor sie ihren oberen Ladeendpunkt SoCₘₐₓ erreicht hat, dass der Arbeitspunkt des DC/DC-Wandlers erhöht wird, bis die Batterie wieder geladen wird oder der maximale Ausgangsstrom der Brennstoffzelle erreicht ist.

Ferner ist es zweckmäßig, wenn beim Laden der Batterie der Arbeitspunkt des DC/DC-Wandlers so eingestellt wird, dass ein maximal zulässiger Ladestrom in die Batterie nicht überschritten wird. Ansonsten erwärmt sich die Batterie zu sehr und wird geschädigt.

Es ist vorteilhaft, dass, wenn die Batterie den voreingestellten oberen Ladepunkt SoCₘₐₓ erreicht hat, der Arbeitspunkt des DC/DC-Wandlers so weit abgesenkt wird, bis der Strom, der aus der Batterie entnommen wird, einen voreingestellten prozentualen Anteil eines zulässigen Dauer-Entladestromes der Batterie erreicht und dass eine Last von der Brennstoffzelle und der Batterie gemeinsam gedeckt wird.

In einer vorteilhaften Form der Ausgestaltung des erfindungsgemäßen Verfahrens wird, wenn sich eine Lastanforderung nicht ändert und die Batterie ihren oberen Ladeendwert SoCₘₐₓ erreicht, die Brennstoffzelle abgeschaltet und solange im Stand-By-Modus gehalten, bis sich der SoC-Wert der Batterie dem unteren Ladeendwert SoCₘᵢₙ nähert und erst dann wird die Brennstoffzelle wieder gestartet.

Wenn sich eine Last verringert, ist es zweckmäßig, wenn der Arbeitspunkt des DC/DC-Wandlers abgesenkt wird, bis ein Strom aus der Batterie wieder ca. den eingestellten prozentualen Anteil eines Dauer-Entladestromes erreicht hat.

Der Arbeitspunkt des DC/DC-Wandlers und damit auch der Brennstoffzelle wird vorteilhafter Weise erst dann verändert, wenn eine neue anstehende Last länger als eine einstellbare Totzeit ansteht. Dadurch wird eine ständige Änderung oder ein Schwingen des Arbeitspunktes der Brennstoffzelle verhindert. Zusätzlich wird die Geschwindigkeit, mit der der DC/DC-Wandler den Arbeitspunkt und damit auch den Strom aus der Brennstoffzelle ändert, durch die Vorgaben für die maximal zulässigen Stromänderungsraten von der Brennstoffzelle begrenzt. Durch dieses Verfahren wird ein weiterer Schutz der Brennstoffzelle und somit eine Verlängerung der Lebensdauer erreicht.

Auch kann die Ausgangsleistung der Brennstoffzelle nicht beliebig weit reduziert werden, da dadurch die Lebensdauer ebenfalls negativ beeinflusst wird. Die zulässige, dauerhafte Minimallast der Brennstoffzelle P_{BZmin} wird vom Hersteller vorgegeben.

Zum Schutz der Batterie ist es zweckmäßig, wenn der Arbeitspunkt des DC/DC-Wandlers erhöht wird, wenn der maximal zulässige Langzeit-Entladestrom der Batterie erreicht oder überschritten wird, bis der Langzeit-Entlade-Strom wieder unter seinen Maximalwert sinkt. Der Kurzzeit-Entlade-Strom der Batterie beträgt meist ein Mehrfaches des Langzeit-EntladeStromes, weshalb kurzzeitige Überschreitungen des Langzeit-Entlade-Stromes oder Stromspitzen keinen negativen Einfluss auf die Lebensdauer der Batterie haben.

Kann ein einziges Energieversorgungsmodul nicht die geforderte Last allein bedienen, ist es vorteilhaft, wenn mehrere Energieversorgungsmodule parallelgeschaltet werden. Das aus mehreren Energieversorgungsmodulen aufgebaute Energieversorgungssystem besteht dann aus autarken, gleichartigen Komponenten, ohne dass ein übergeordnetes EnergieversorgungsSystem benötigt wird. Arbeiten mehrere dieser Energieversorgungsmodule parallel in einem Netz, verhalten sich alle diese Energieversorgungsmodule gleich, z.B. wie parallelgeschaltete Batterien oder geregelte Netzteile. Alle beteiligten Energieversorgungsmodule versorgen gleichberechtigt das Netz.

Sind die Parameter der einzelnen Energieversorgungsmodule nicht gleich eingestellt, z.B. der SoCₘₐₓ des einen Systems ist höher eingestellt als bei den anderen Versorgungsmodulen, kann es vorkommen, dass Energie für längere Zeit vom Verbrauchersystem in die Batterie gespeist wird und die Batterie vom Verbrauchersystem mit geladen wird. In diesem Fall wird der Arbeitspunkt des DC/DC-Wandlers auf seinen Minimalwert reduziert. Wird innerhalb dieser Zeit wieder mehr Energie aus dem System benötigt, ändert sich der Arbeitspunkt des DC/DC-Wandlers entsprechend dem vorher beschrieben Verfahren. Ändert sich die Lastanforderung aus dem System nicht und die Batterie erreicht ihren oberen Ladeendwert, SoCₘₐₓ, wird die Brennstoffzelle abgeschaltet. Die Brennstoffzelle verbleibt so lange im Stand-By-Modus, bis sich der SoC-Wert der Batterie dem unteren Ladeendwert SoCₘᵢₙ nähert. Erst jetzt wird die Brennstoffzelle wieder gestartet. Da alle Batterien parallelgeschaltet sind, haben alle Batterien auch das gleiche Spannungsniveau und in etwa den gleichen Ladezustand. Entsprechend verhalten sich alle Versorgungssysteme im Netzwerk gleich.

Das erfindungsgemäße Energieversorgungssystem mit den Energieversorgungsmodulen und dem entsprechenden Verfahren zum Energiemanagement zwischen Batterie und Brennstoffzelle ermöglicht es, ein Verbrauchersystem auf effektivste Weise mit Energie zu versorgen und gleichzeitig die maximale Lebensdauer der Komponenten zu gewährleisten. Das Energieversorgungssystem und das entsprechende Verfahren bieten folgende Vorteile:
Das jeweilige Energiemanagement jedes einzelnen Energieversorgungsmoduls stellt sicher, dass keiner der Grenzwerte der einzelnen Bauteile in der Versorgungs-Komponente überschritten wird und dadurch die Bauteile Schaden nehmen könnten.

Das Energieversorgungssystem verhält sich zum VerbraucherSystem hin wie jedes andere Energieversorgungssystem, nur mit einer erheblich größeren Kapazität, die einzig und allein durch die Anzahl der Energieversorgungsmodule bestimmt wird.

Da alle schnellen Stromänderungen, die im System auftreten können, z.B. beim Ein- oder Ausschalten von Verbrauchern, von der Batterie getragen werden, sind keine Sanftanlaufschaltungen oder Bauteile zur Begrenzung der Einschaltströme im Verbraucher-System notwendig.

Die Grundlast wird von beiden Komponenten geliefert, also sowohl von der Batterie als auch von der Brennstoffzelle. Ein Überdimensionieren der Batterie ist nicht notwendig.

Bei Bedarf sorgt die Brennstoffzelle dafür, dass neben der Netzversorgung auch die Batterie geladen wird. Dabei achtet das Energiemanagementsystem darauf, dass der maximale Ladestrom der Batterie nicht überschritten wird.

Das Energiemanagement verhindert, dass die Brennstoffzelle zu oft und zu schnell ihre Leistung ändern muss, was sich negativ auf die Lebensdauer der Brennstoffzelle auswirkt.

Dadurch, dass alle Versorgungskomponenten gleich sind, kann die Fertigung vereinfacht werden. Es muss immer nur die gleiche Größe eines Energieversorgungsmoduls, mit immer den gleichen Bauteilen gebaut werden, gleich welche Größe das Verbraucher-System tatsächlich hat. D.h., es fallen kaum Konstruktionsaufwände für neue Anlagen an.

Alle Kombinationen aus Batterie und Brennstoffzelle arbeiten autark.

Es können beliebig viele dieser Kombinationen parallel zusammengeschaltet werden, ohne dass es ein übergeordnetes Leitsystem geben muss, das auf die jeweilige Anlage angepasst werden muss.

Es wird eine hohe Redundanz erzielt und es wird eine hohe Flexibilität bei geringen Fertigstellungskosten erreicht.

Die Erfindung wird beispielhaft anhand der Zeichnungen näher erläutert. Es zeigen schematisch und nicht maßstäblich:
- Figur 1: ein Energieversorgungsmodul eines Energieversorgungssystems gemäß der Erfindung,
- Figur 2: ein Energieversorgungssystem umfassend mehrere Energieversorgungsmodule und
- Figur 3: zeitliche Verläufe der Brennstoffzellenleistung und des Batterieladezustandes in Abhängigkeit einer Lastanforderung.

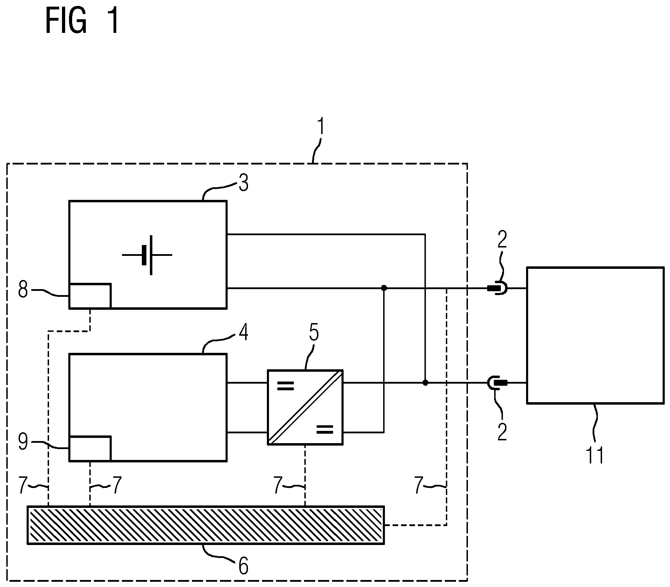

Die Figur 1 zeigt schematisch und beispielhaft ein Energieversorgungsmodul 1 eines Energieversorgungssystems 10 gemäß der Erfindung, welches an einen Verbraucher 11 gekoppelt ist. Das Energieversorgungsmodul 1 umfasst Verbraucheranschlüsse 2, eine Batterie 3, die direkt an die Verbraucheranschlüsse 2 koppelt, eine Brennstoffzelle 4, die über einen DC/DC-Wandler 5 an die Verbraucheranschlüsse 2 koppelt, sowie ein Energiemanagementsystem 6, mit dem der Arbeitspunkt der Brennstoffzelle 4, bzw. der Arbeitspunkt des DC/DC-Wandlers 5 in Abhängigkeit von einem Ladezustand der Batterie 3 steuerbar sind. Die Steuerung erfolgt über ein Bus-System 7, welches für die Kommunikation zwischen dem Energiemanagementsystem 6 und einem Batteriemanagementsystem 8, für die Kommunikation zwischen dem Energiemanagementsystem 6 und einer Steuerung 9 der Brennstoffzelle 4 und für die Kommunikation zwischen dem Energiemanagementsystem 6 und dem DC/DC-Wandler 5 sorgt. Alle für das Verfahren notwendigen Daten, wie z.B. aus der Strommessung an den Verbraucheranschlüssen 2, Steuerwerte, Warnungen und Fehlermeldungen werden über dieses Bus-System 7 übertragen.

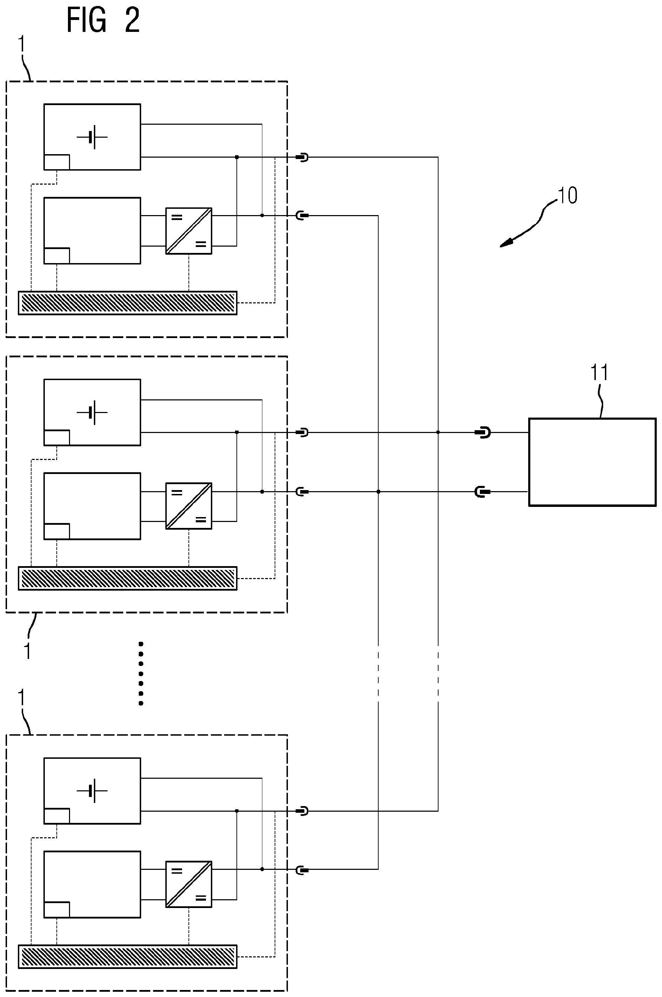

Figur 2 zeigt ein Energieversorgungssystem 10 nach der Erfindung. Es umfasst bezüglich einer Steuerung voneinander unabhängige, parallelgeschaltete Energieversorgungsmodule 1.

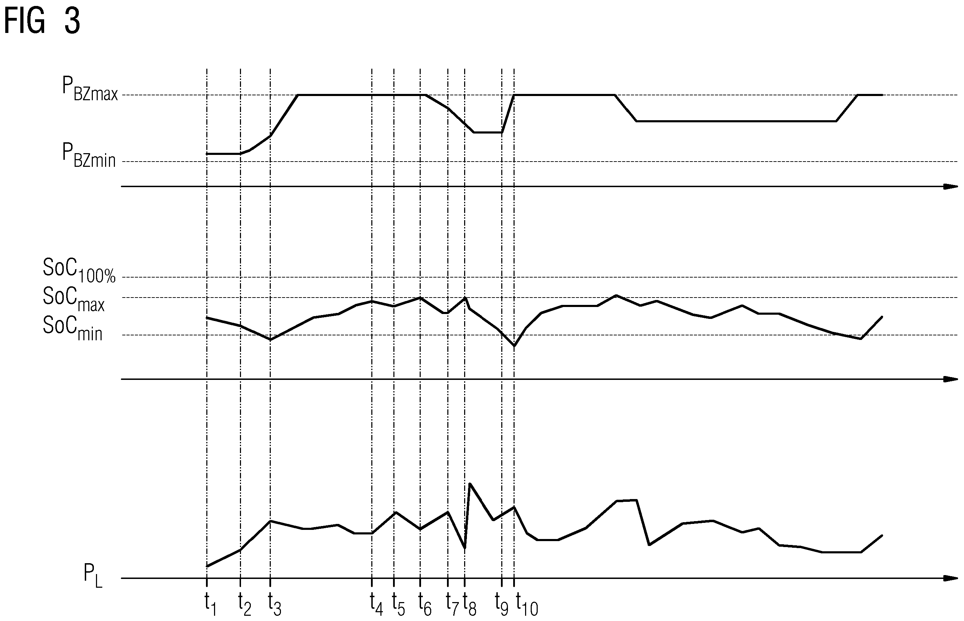

Figur 3 zeigt im unteren Teil beispielhaft einen zeitlichen Verlauf einer Lastanforderung P_{L}.

Direkt darüber, in der Mitte der Figur 3, ist ein Batterieladezustand dargestellt. Für den Ladezustand der Batterie sind die drei wichtigsten Werte eingezeichnet: voller Ladezustand SoC_{100%}, für die Lebensdauer der Batterie idealer maximaler Ladezustand SoCₘₐₓ und empfohlener minimaler Ladezustand SoCₘᵢₙ. Der Ladezustand SoC der Batterie 3 bewegt sich im Wesentlichen immer in den festgelegten Grenzen SoCₘₐₓ und SoCₘᵢₙ. Ein kurzfristiges Unterschreiten von SoCₘᵢₙ ist dabei unbedenklich.

Über dem Batterieladezustand ist in der Figur 3 eine zugehörige Brennstoffzellenleistung P_{BZ} dargestellt. Der Verlauf der Brennstoffzellenleistung liegt zwischen einer maximalen Brennstoffzellenleistung P_{BZmax} und einer minimalen Brennstoffzellenleistung P_{BZmin}.

Im Folgenden wird anhand der in der Figur 3 gezeigten Verläufe das Verhalten eines Energieversorgungsmoduls 1 bei verschiedenen Lastzuständen bzw. Lastentwicklungen näher erläutert.

Ab Zeitpunkt t₈ zeigen die Kurvenverläufe ein Beispiel dafür, dass transient auftretende Lastspitzen nur von der Batterie 3 abgedeckt werden. Generell wird der Arbeitspunkt des DC/DC-Wandlers 5 so gesteuert, dass zusammen mit der Batterie 3 immer genügend Leistung zur Verfügung steht.

Zum Zeitpunkt t₃ wird festgestellt, dass der Ladezustand der Batterie (SoC) unter den vordefinierten Schwellwert SoCₘᵢₙ sinkt. Als Folge wird der Arbeitspunkt des DC/DC-Wandlers 5 erhöht und die Batterie 3 wechselt in den Ladezustand. Auch zum Zeitpunkt t₉ sinkt der Ladezustand der Batterie (SoC) unter den vordefinierten Schwellwert SoCₘᵢₙ. Allerdings steigt hier die Lastanforderung vergleichsweise schnell, so dass durch die Brennstoffzelle 4 allein nicht ausreichend mehr Leistung bereitgestellt werden kann. Der Batterieladezustand sinkt daher kurzfristig unter die Untergrenze SoCₘᵢₙ, bis zum Zeitpunkt t₁₀ die Lastanforderung sinkt und die von der Brennstoffzelle 4 bereitstellbare Leistung ausreichend hoch ist, sowohl den Leistungsbedarf des Verbrauchers 11 zu decken als auch die Batterie 3 wieder aufzuladen.

Zum Zeitpunkt t₄ wechselt die Batterie 3 von Laden zum Entladen, und zwar bevor sie ihren oberen Ladeendpunkt SoCₘₐₓ erreicht hat. Ist der maximale Ausgangsstrom der Brennstoffzelle 4 noch nicht erreicht, wird der Arbeitspunkt des DC/DC-Wandlers 5 erhöht, bis die Batterie 3 wieder geladen wird oder der maximale Ausgangsstrom der Brennstoffzelle 4 erreicht ist. Im Beispiel der Figur 3 läuft zum Zeitpunkt t₄ die Brennstoffzelle bereits auf dem Maximum, weshalb am Arbeitspunkt des DC/DC-Wandlers nichts mehr geändert wird. Allerdings wird zum Zeitpunkt t₅, an dem die Lastanforderung zu sinken beginnt, der Arbeitspunkt beibehalten und die Batterie 3 geladen, bis zum Zeitpunkt t₆ SoCₘₐₓ erreicht ist.

Generell wird beim Laden der Batterie 3 der Arbeitspunkt des DC/DC-Wandlers 5 so eingestellt, dass ein maximal zulässiger Ladestrom in die Batterie 3 nicht überschritten wird. Dies ist beispielsweise zum Zeitpunkt t₇ erkennbar, wo die Batterie 3 geladen wird, dies aber nicht bei maximaler Leistung der Brennstoffzelle 4 erfolgt.

Wenn die Batterie 3 den voreingestellten oberen Ladepunkt SoCₘₐₓ beispielsweise zum Zeitpunkt t₆ erreicht hat, wird der Arbeitspunkt des DC/DC-Wandlers 5 so weit abgesenkt, bis der Strom, der aus der Batterie 3 entnommen wird, einen voreingestellten prozentualen Anteil eines zulässigen Dauer-Entladestromes der Batterie 3 erreicht und eine Last von der Brennstoffzelle 4 und der Batterie 3 gemeinsam gedeckt wird.

Alternativ könnte im Fall, dass sich eine Lastanforderung nicht ändert und die Batterie 3 ihren oberen Ladeendwert SoC-ₘₐₓ erreicht, die Brennstoffzelle 4 abgeschaltet werden und solange im Stand-By-Modus verbleiben, bis sich der SoC-Wert der Batterie 3 dem unteren Ladeendwert SoCₘᵢₙ nähert und erst dann würde die Brennstoffzelle 4 wieder gestartet werden.

Eine Absenkung des Arbeitspunkts des DC/DC-Wandlers 5 ist auch sinnvoll, damit bei einer Verringerung der Last, der Strom aus der Batterie 3 wieder ca. den eingestellten prozentualen Anteil eines Dauer-Entladestromes erreicht.

Aus Figur 3 ist auch erkennbar, dass der Arbeitspunkt des DC/DC-Wandlers 5 und damit auch der Brennstoffzelle 4 erst dann verändert wird, wenn eine neue anstehende Last länger als eine einstellbare Totzeit ansteht. Zum Zeitpunkt t₆ beispielsweise beginnt die Last zu steigen, aber nur der Ladezustand der Batterie 3 folgt instantan, eine Änderung der Brennstoffzellenleistung zeigt sich verzögert.

Schließlich ist aus der Figur 3 erkennbar, dass der Arbeitspunkt des DC/DC-Wandlers 5 erhöht wird, wenn der maximal zulässige Langzeit-Entladestrom der Batterie 3 erreicht oder überschritten wird, bis der Langzeit-Entlade-Strom wieder unter seinen Maximalwert sinkt. Dies zeigt sich am Kurvenverlauf im Bereich der Zeitpunkte t₁, t₂ und t₃. Am Punkt t₂ nimmt die Steigung der Lastanforderung zu, der Ladezustand der Batterie 3 sinkt schneller und die Leistungskurve der Brennstoffzelle 4 wechselt von einer Seitwärtsbewegung in einen Anstieg.

## Patentansprüche

1. Energieversorgungssystem (10) umfassend parallelgeschaltete und jeweils autark gesteuerte Energieversorgungsmodule (1), die Energieversorgungsmodule (1) jeweils umfassend Verbraucheranschlüsse (2), eine Batterie (3), die direkt an die Verbraucheranschlüsse (2) koppelt, eine Brennstoffzelle (4), die über einen DC/DC-Wandler (5) an die Verbraucheranschlüsse (2) koppelt, wobei innerhalb eines Energieversorgungsmoduls (1) durch ein Energiemanagementsystem (6) der Arbeitspunkt der Brennstoffzelle (4) bzw. der Arbeitspunkt des DC/DC-Wandlers (5) in Abhängigkeit von einem Ladezustand der Batterie (3) steuerbar sind.

2. Energieversorgungssystem (10) nach Anspruch 1, wobei die Energieversorgungsmodule (1) jeweils ein Bus-System (7) für die Kommunikation zwischen dem Energiemanagementsystem (6) und einem Batteriemanagementsystem (8), für die Kommunikation zwischen dem Energiemanagementsystem (6) und einer Steuerung (9) der Brennstoffzelle (4) und für die Kommunikation zwischen dem Energiemanagementsystem (6) und dem DC/DC-Wandler (5) umfassen.

3. Verfahren zur Energieversorgung, bei dem eine geforderte Grundlast von einem Energieversorgungssystem (10) umfassend parallelgeschaltete und jeweils autark gesteuerte Energieversorgungsmodule (1) bereitgestellt werden kann, wobei je Energieversorgungsmodul (1) Energie sowohl von einer Batterie (3) direkt als auch über einen DC/DC-Wandler (5) von einer Brennstoffzelle (4), als auch von Batterie (3) und Brennstoffzelle (4) gemeinsam bereitgestellt werden kann, wobei jeweils ein Ladezustand der Batterie (3) ermittelt wird und ein Arbeitspunkt der Brennstoffzelle (4) bzw. ein Arbeitspunkt des DC/DC-Wandlers (5) in Abhängigkeit vom Ladezustand der Batterie (3) gesteuert wird.

4. Verfahren nach Anspruch 3, wobei transient auftretende Lastspitzen nur von der Batterie (3) abgedeckt werden.

5. Verfahren nach einem der Ansprüche 3 oder 4, wobei sich ein Ladezustand der Batterie im Wesentlichen in festgelegten Grenzen bewegt.

6. Verfahren nach einem der Ansprüche 3 bis 5, wobei der Arbeitspunkt des DC/DC-Wandlers (5) so gesteuert wird, dass zusammen mit der Batterie (3) immer genügend Leistung zur Verfügung steht.

7. Verfahren nach einem der Ansprüche 3 bis 6, wobei für das Verfahren notwendige Daten, Steuerwerte, Warnungen und Fehlermeldungen über ein Bus-System (7) übertragen werden.

8. Verfahren nach einem der Ansprüche 3 bis 7, wobei, wenn festgestellt wird, dass der Ladezustand der Batterie (SoC) unter einen vordefinierten Schwellwert SoCₘᵢₙ sinkt, der Arbeitspunkt des DC/DC-Wandlers (5) so weit erhöht wird, bis die Batterie (3) in den Ladezustand wechselt.

9. Verfahren nach einem der Ansprüche 3 bis 8, wobei, wenn die Batterie (3) von Laden in Entladen wechselt, bevor sie ihren oberen Ladeendpunkt SoCₘₐₓ erreicht hat, der Arbeitspunkt des DC/DC-Wandlers (5) erhöht wird, bis die Batterie (3) wieder geladen wird oder der maximale Ausgangsstrom der Brennstoffzelle (4) erreicht ist.

10. Verfahren nach einem der Ansprüche 3 bis 9, wobei beim Laden der Batterie (3) der Arbeitspunkt des DC/DC-Wandlers (5) so eingestellt wird, dass ein maximal zulässiger Ladestrom in die Batterie (3) nicht überschritten wird.

11. Verfahren nach einem der Ansprüche 3 bis 10, wobei, wenn die Batterie (3) den voreingestellten oberen Ladepunkt SoCₘₐₓ erreicht hat, der Arbeitspunkt des DC/DC-Wandlers (5) so weit abgesenkt wird, bis der Strom, der aus der Batterie (3) entnommen wird, einen voreingestellten prozentualen Anteil eines zulässigen Dauer-Entladestromes der Batterie (3) erreicht und eine Last von der Brennstoffzelle (4) und der Batterie (3) gemeinsam gedeckt wird.

12. Verfahren nach einem der Ansprüche 3 bis 11, wobei, wenn sich eine Lastanforderung nicht ändert und die Batterie (3) ihren oberen Ladeendwert SoCₘₐₓ erreicht, die Brennstoffzelle (4) abgeschaltet wird und solange im Stand-By-Modus verbleibt, bis sich der SoC-Wert der Batterie dem unteren Ladeendwert SoCₘᵢₙ nähert und erst dann wird die Brennstoffzelle (4) wieder gestartet.

13. Verfahren nach einem der Ansprüche 3 bis 12, wobei der Arbeitspunkt des DC/DC-Wandlers (5) abgesenkt wird, bis ein Strom aus der Batterie (3) wieder ca. den eingestellten prozentualen Anteil eines Dauer-Entladestromes erreicht hat, wenn sich eine Last verringert.

14. Verfahren nach einem der Ansprüche 3 bis 13, wobei der Arbeitspunkt des DC/DC-Wandlers (5) und damit auch der Brennstoffzelle (4) erst dann verändert wird, wenn eine neue anstehende Last länger als eine einstellbare Totzeit ansteht.

15. Verfahren nach einem der Ansprüche 3 bis 14, wobei der Arbeitspunkt des DC/DC-Wandlers (5) erhöht wird, wenn der maximal zulässige Langzeit-Entladestrom der Batterie (3) erreicht oder überschritten wird, bis der Langzeit-Entlade-Strom wieder unter seinen Maximalwert sinkt.

16. Verfahren nach einem der Ansprüche 3 bis 15, wobei mehrere Energieversorgungsmodule (1) parallelgeschaltet werden.

## Claims

1. An energy supply system (10) comprising energy supply modules (1) connected in parallel and each autonomously controlled, the energy supply modules (1) each comprising load terminals (2), a battery (3) directly coupled to the load terminals (2), a fuel cell (4) coupled to the load terminals (2) via a DC/DC converter (5), wherein the operating point of the fuel cell (4) and/or the operating point of the DC/DC converter (5) within an energy supply module (1) are controllable by an energy management system (6) depending on a state of charge of the battery (3).

2. The energy supply system (10) according to claim 1, wherein the energy supply modules (1) each comprise a bus system (7) for communication between the energy management system (6) and a battery management system (8), for communication between the energy management system (6) and a controller (9) of the fuel cell (4), and for communication between the energy management system (6) and the DC/DC converter (5).

3. A method for supplying energy, wherein a required base load may be provided by an energy supply system (10) comprising energy supply modules (1) connected in parallel and each autonomously controlled,
wherein, at each energy supply module (1), energy may be provided directly by a battery (3) or by a fuel cell (4) via a DC/DC converter (5) or jointly by both the battery (3) and the fuel cell (4),
wherein a respective state of charge of the battery (3) is determined and an operating point of the fuel cell (4) and/or an operating point of the DC/DC converter (5) is controlled depending on the state of charge of the battery (3).

4. The method according to claim 3, wherein transiently occurring load peaks are covered by the battery (3) only.

5. The method according to any one of claims 3 or 4, wherein a state of charge of the battery substantially is substantially within predetermined limits.

6. The method according to any one of claims 3 to 5, wherein the operating point of the DC/DC converter (5) is controlled such that, in combination with the battery (3), sufficient power always is available.

7. The method according to any one of claims 3 to 6, wherein data, control values, warnings, and error messages required for the method are transmitted via a bus system (7).

8. The method according to any one of claims 3 to 7, wherein, when the state of charge (SoC) of the battery is determined to fall below a predefined threshold SoCₘᵢₙ, the operating point of the DC/DC converter (5) is increased until the battery (3) switches to the state of charge.

9. The method according to any one of claims 3 to 8, wherein, when the battery (3) switches from charging to discharging prior to having reached its upper charging end point SoCₘₐₓ, the operating point of the DC/DC converter (5) is increased until the battery (3) is charged again or the maximum output current of the fuel cell (4) is reached.

10. The method according to any one of claims 3 to 9, wherein, upon charging the battery (3), the operating point of the DC/DC converter (5) is adjusted such that a maximum allowed charging current to the battery (3) is not exceeded.

11. The method according to any one of claims 3 to 10, wherein, when the battery (3) has reached the preset upper charging point SoCₘₐₓ, the operating point of the DC/DC converter (5) is lowered to where the current drawn from the battery (3) reaches a preset percentage of an allowed continuous discharge current of the battery (3) and a load is covered jointly by the fuel cell (4) and the battery (3).

12. The method according to any one of claims 3 to 11, wherein, when a load requirement does not change and the battery (3) reaches its upper charging end point SoCₘₐₓ, the fuel cell (4) is turned off and remains in standby mode until the SoC value of the battery approaches the lower charging end value SoCₘᵢₙ, by which point the fuel cell (4) is restarted.

13. The method according to any one of claims 3 to 12, wherein the operating point of the DC/DC converter is lowered until a current from the battery (3) has reached approximately the adjusted percentage of a continuous discharge current as a load decreases.

14. The method according to any one of claims 3 to 13, wherein the operating point of the DC/DC converter (5), and thus also of the fuel cell (4), are changed only when a new impending load is impending for a time longer than an adjustable idle time.

15. The method according to any one of claims 3 to 14, wherein the operating point of the DC/DC converter (5) is increased when the maximum allowed long-term discharge current of the battery (3) is reached or exceeded until the long-term discharge current falls again below its maximum value.

16. The method according to any one of claims 3 to 15, wherein multiple energy supply modules (1) are connected in parallel.

## Revendications

1. Système d'alimentation en énergie (10) comprenant des modules d'alimentation en énergie (1), connectés en parallèle et respectivement commandés de manière autonome, les modules d'alimentation en énergie (1) comprenant respectivement des connexions de consommateur (2), une batterie (3) qui est couplée directement aux connexions de consommateur (2), une pile à combustible (4) qui est couplée aux connexions de consommateur (2) par l'intermédiaire d'un convertisseur CC/CC (5), dans lequel à l'intérieur d'un module d'alimentation en énergie (1) le point de fonctionnement de la pile à combustible (4) ou le point de fonctionnement du convertisseur CC/CC (5) peut être commandé par un système de gestion d'énergie (6) en fonction d'un état de charge de la batterie (3).

2. Système d'alimentation en énergie (10) selon la revendication 1, dans lequel les modules d'alimentation en énergie (1) comprennent respectivement un système de bus (7) pour la communication entre le système de gestion d'énergie (6) et un système de gestion de batterie (8), pour la communication entre le système de gestion d'énergie (6) et une commande (9) de la pile à combustible (4) et pour la communication entre le système de gestion d'énergie (6) et le convertisseur CC/CC (5).

3. Procédé d'alimentation en énergie, dans lequel une charge de base demandée peut être fournie par un système d'alimentation en énergie (10) comprenant des modules d'alimentation en énergie (1) connectés en parallèle et respectivement commandés de manière autonome,
dans lequel, pour chaque module d'alimentation en énergie (1), de l'énergie peut être fournie à la fois directement par une batterie (3) et par une pile à combustible (4) par l'intermédiaire d'un convertisseur CC/CC (5), et par la batterie (3) et la pile à combustible (4) ensemble,
dans lequel respectivement un état de charge de la batterie (3) est déterminé et un point de fonctionnement de la pile à combustible (4) ou un point de fonctionnement du convertisseur CC/CC (5) est commandé en fonction d'un état de charge de la batterie (3).

4. Procédé selon la revendication 3, dans lequel des pics de charge transitoires sont couverts uniquement par la batterie (3).

5. Procédé selon l'une quelconque des revendications 3 ou 4, dans lequel un état de charge de la batterie varie substantiellement dans des limites fixes.

6. Procédé selon l'une quelconque des revendications 3 à 5, dans lequel le point de fonctionnement du convertisseur CC/CC (5) est commandé de telle sorte qu'une puissance suffisante soit toujours fournie conjointement avec la batterie (3).

7. Procédé selon l'une quelconque des revendications 3 à 6, dans lequel des données, des valeurs de commande, des avertissements et des messages d'erreur nécessaires au procédé sont transmis par l'intermédiaire d'un système de bus (7).

8. Procédé selon l'une quelconque des revendications 3 à 7, dans lequel, s'il est constaté que l'état de charge de la batterie (SoC) descend sous une valeur seuil prédéfinie, SoCₘᵢₙ, le point de fonctionnement du convertisseur CC/Cs (5) est relevé jusqu'à ce que la batterie (3) passe à l'état de charge.

9. Procédé selon l'une quelconque des revendications 3 à 8, dans lequel, lorsque la batterie (3) passe de la charge à la décharge avant d'atteindre son point de charge final supérieur SoCₘₐₓ, le point de fonctionnement du convertisseur CC/CC (5) est relevé jusqu'à ce que la batterie (3) soit à nouveau chargée ou que le courant de sortie de la pile à combustible (4) soit atteint.

10. Procédé selon l'une quelconque des revendications 3 à 9, dans lequel lors de la charge de la batterie (3), le point de fonctionnement du convertisseur CC/CC (5) est réglé de telle sorte qu'un courant de charge admissible maximal dans la batterie (3) ne soit pas dépassé.

11. Procédé selon l'une quelconque des revendications 3 à 10, dans lequel, lorsque la batterie (3) a atteint le point de charge supérieur SoCₘₐₓ préréglé, le point de fonctionnement du convertisseur CC/CC (5) est abaissé jusqu'à ce que le courant qui est prélevé sur la batterie (3) atteigne un pourcentage préréglé d'un courant de décharge permanent admissible de la batterie (3) et qu'une charge de la pile à combustible (4) et de la batterie (3) soit couverte ensemble.

12. Procédé selon l'une quelconque des revendications 3 à 11, dans lequel, si la demande de charge ne varie pas et la batterie (3) atteint sa valeur finale de charge SoCₘₐₓ, la pile à combustible (4) est déconnectée et reste en mode veille jusqu'à ce que la valeur SoC de la batterie s'approche de la valeur seuil de charge SoCₘᵢₙ, et la pile à combustible (4) n'est redémarrée qu'à ce moment-là.

13. Procédé selon l'une quelconque des revendications 3 à 12, dans lequel le point de fonctionnement du convertisseur CC/CC (5) est baissé jusqu'à ce qu'un courant provenant de la batterie (3) ait à nouveau atteint environ le pourcentage réglé d'un courant d'entrée permanent si une charge diminue.

14. Procédé selon l'une quelconque des revendications 3 à 13, dans lequel le point de fonctionnement du convertisseur CC/CC (5) et donc aussi de la pile à combustible (4) n'est modifié que si une nouvelle charge imminente est imminente plus longtemps qu'un temps mort réglable.

15. Procédé selon l'une quelconque des revendications 3 à 14, dans lequel le point de fonctionnement du convertisseur CC/CC (5) est relevé si le courant de décharge de longue durée admissible maximal de la batterie (3) est atteint ou dépassé jusqu'à ce que le courant de décharge de longue durée redescende sous sa valeur maximale.

16. Procédé selon l'une quelconque des revendications 3 à 15, dans lequel plusieurs modules d'alimentation en énergie (1) sont connectés en parallèle.
